# EUROPEAN PATENT APPLICATION

(11) **EP 4 742 498 A1**
(43) Date of publication of application: **13.05.2026**
(21) Application number: 24211424.7
(22) Date of filing: 07.11.2024
(51) Int. Cl.: H02J 50/10, H02J 50/60, H02J 50/80

(54) **AN APPARATUS**

(71) Applicant: NXP B.V., 5656 AG Eindhoven (NL)
(72) Inventor: Verma, Chetan, 5656 AG Eindhoven (NL); Wobak, Markus, 5656 AG Eindhoven (NL)
(74) Representative: Krott, Michel

(57) **Abstract**

An apparatus comprising a power-emitting device comprising an antenna, power circuitry configured to provide power via the antenna for wireless charging of a power-receiving device, and a processor, the processor configured to at least analyse signals from said antenna to determine the presence of the power-receiving device proximal the power-emitting device and to determine the presence of a foreign object, FO, proximal the power-emitting device. Wherein the processor is configured to control the power circuitry to either interrupt or not initiate said provision of power for wireless charging of the power-receiving device based on said analysis of on one or both of said analysis of the signals and the power provided by the power circuitry being indicative of the power-emitting device being proximal to a foreign object. In response to said analysis of the signals being indicative that a FO-removal event has occurred, the processor is configured to control the power circuitry to provide power for wireless charging of the power-receiving device.

## Description

### Field

The present disclosure relates to an apparatus, and in particular, an apparatus comprising a power-emitting device, an antenna and power circuitry. It also relates to a method for controlling said apparatus.

### Background

Wireless charging of accessories can be convenient for the user. Near Field Communication (NFC) can be used to perform wireless charging (WLC) of small-scale battery-powered accessories. During an ongoing charging activity, a power-emitting device performs regular presence checks for power-receiving devices and foreign objects (FO, i.e. metal or other NFC tags) in close proximity to the power-emitting device. Typically, in the case of FO presence detection, the power-emitting device stops an ongoing charging activity due to safety risks (like overheating) or to avoid damage to the FO (like overexposure of too high magnetic field strength).

### Summary

According to a first aspect of the present disclosure there is provided an apparatus comprising:
a power-emitting device comprising:
an antenna,
power circuitry configured to provide power via the antenna for wireless charging of a power-receiving device, and
a processor, the processor configured to at least analyse signals from said antenna to determine the presence of the power-receiving device proximal the power-emitting device and to determine the presence of a foreign object, FO, proximal the power-emitting device, and
wherein the processor is configured to:
   based on one or both of said analysis of the signals and the power provided by the power circuitry being indicative of the power-emitting device being proximal to a foreign object, control the power circuitry to either interrupt or not initiate said provision of power for wireless charging of the power-receiving device, and
   in response to said analysis of the signals being indicative that a FO-removal event has occurred, wherein said FO-removal event comprises the FO no longer being proximal the power-emitting device while the power-receiving device remains proximal the power-emitting device, control the power circuitry to provide power for wireless charging of the power-receiving device.

In one or more embodiments said analysis of the signals being indicative of the power-emitting device being proximal to a foreign object is determined by the processor being configured to one or both of:
determine a decrease in efficiency of power transfer between the power-emitting device and the power-receiving device, based on information indicative of the power received by the power-receiving device in the signals from said antenna and information indicative of the power provided by the power circuitry; and
determine a rate of change, above a threshold, in the power provided by the power circuitry for wireless charging of the power-receiving device.

In one or more embodiments the processor is configured to, based on said analysis of the signals being indicative that the power-emitting device is proximal to the power-receiving device and no FO is proximal the power-receiving device, control the power circuitry to provide power for wireless charging of the power-receiving device.

In one or more embodiments the processor being configured to control the power circuitry to either interrupt or not initiate said provision of power for wireless charging of the power-receiving device comprises the processor being configured such that:
if said analysis of the signals is indicative of the power-emitting device being proximal to the FO at a time when the power circuitry is providing power for wireless charging of the power-receiving device, said processor is configured to control the power circuitry to interrupt said provision of power for wireless charging of the power-receiving device; and
if said analysis of the signals is indicative of the power-emitting device being proximal to the FO and at later time the power-receiving device is determined to be proximal to the power-emitting device in addition to said FO, said processor is configured to control the power circuitry to not initiate said provision of power for wireless charging of the power-receiving device at least while said FO is determined to be proximal the power-emitting device.

In one or more embodiments said processor is configured to, as part of said analysis of the signals being indicative that the FO-removal event has occurred, compare one or more signals received from the antenna to a predetermined signature that characterises signals expected from said antenna without the foreign object proximal the power-emitting device but with the power-receiving device proximal the power-emitting device, and determine the FO-removal event based on said comparison.

In one or more embodiments the apparatus includes antenna loading measurement circuitry configured to measure an antenna voltage from the antenna in response to a current provided to the antenna, and wherein said comparison comprises a comparison of the antenna voltage to the predetermined signature, wherein said predetermined signature comprises at least one antenna voltage characterising when the foreign object is not proximal the power-emitting device but the power-receiving device is proximal the power-emitting device.

In one or more examples the antenna voltage is influenced by electromagnetic coupling between the antenna and one or more devices and/or foreign objects proximal the antenna.

In one or more embodiments said predetermined signature comprises a range of antenna voltages characterising when the foreign object is not proximal the power-emitting device but the power-receiving device is proximal the power-emitting device.

In one or more embodiments the apparatus includes antenna loading measurement circuitry configured to measure an antenna voltage from the antenna in response to a current provided to the antenna, wherein the antenna loading measurement circuitry is configured to determine an in-phase, I, component and a quadrature, Q, component of the antenna voltage, and wherein said comparison comprises a comparison of the I and Q components of the antenna voltage to the predetermined signature, and wherein said predetermined signature is based on I and Q components characterising when the foreign object is not proximal the power-emitting device but the power-receiving device is proximal the power-emitting device.

In one or more embodiments said processor is configured to determine that the FO-removal event has occurred based on the condition that: the I component and the Q component of the antenna voltage is within a threshold tolerance of the I and Q components of the predetermined signature following the control of the power circuitry to interrupt said provision of power for wireless charging of the power-receiving device.

In one or more embodiments the processor is configured to determine the predetermined signature based on one or more measurements of the respective antenna voltages at a time when said analysis of the signals is indicative of the power-emitting device being proximal to the power-receiving device while not being indicative that a foreign-object is proximal the power-emitting device.

In one or more embodiments the processor is configured to store a plurality of predetermined signatures and said comparison is a comparison to determine whether the I and Q components of the antenna voltage match with any one of said plurality of predetermined signatures.

In one or more embodiments the processor is configured to store in a memory, the plurality of predetermined signatures each with a confidence score, wherein based on the antenna voltage matching with any one of said plurality of predetermined signatures, the processor is configured establish communication between the power-emitting device and the power-receiving device. In response to successfully establishing said communication phase, the processor is configured to not decrease the confidence score of the respective signature of the plurality of predetermined signatures. In response to unsuccessfully establishing said communication, the processor is configured to decrease the confidence score of the respective signature of the plurality of predetermined signatures. In one or more examples, the confidence score is used to determine whether to retain or remove the respective signature of the plurality of predetermined signatures from the memory, such as by comparison to a minimum confidence score.

In some examples upon successfully establishing said communication phase, the processor may be configured to one of: i) increase the confidence score of the respective signature of the plurality of predetermined signatures, or ii) leave the confidence score of the respective signature of the plurality of predetermined signatures unchanged.

In one or more examples said antenna voltage is indicative of the impedance of the antenna.

In one or more embodiments the processor is configured to perform said analysis of the signals from said antenna to determine the presence of the foreign object proximal the power-emitting device by the processor being configured to
provide for transmission of one or more messages for the power-receiving device and to receive one or more response messages during a time when the power circuitry is providing power for wireless charging, wherein the processor is configured to extract from the one or more response messages, information indicative of the power the power-receiving device is receiving and determine changes in said power the power-receiving device is receiving relative to the power the power circuitry is providing.

In one or more embodiments the processor being configured to analyse the signals from said antenna to determine the presence of the power-receiving device proximal the power-emitting device and to determine the presence of a foreign object proximal the power-emitting device is provided by the processor being configured to measure changes in impedance of the antenna and compare said changes to predetermined information.

In one or more examples the apparatus is an NFC apparatus, wherein the apparatus is a wireless charger.

According to a second aspect of the present disclosure there is provided a method of controlling an apparatus, the apparatus comprising a power-emitting device, the power-emitting device comprising: an antenna; power circuitry configured to provide power via the antenna for wireless charging of a power-receiving device; and a processor, wherein the method comprises, by the processor,
analysing signals from said antenna to determine the presence of the power-receiving device proximal the power-emitting device and to determine the presence of a foreign object proximal the power-emitting device, and
based on said analysis of the signals being indicative of the power-emitting device being proximal to a foreign object, FO, controlling the power circuitry to either interrupt or not initiate said provision of power for wireless charging of the power-receiving device, and
in response to said analysis of the signals being indicative that a FO-removal event has occurred, wherein said FO-removal event comprises the FO no longer being proximal the power-emitting device while the power-receiving device remains proximal the power-emitting device, controlling the power circuitry to provide power for wireless charging of the power-receiving device.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows a schematic block diagram of an example embodiment of an apparatus comprising a power-emitting device;
Figure 2 shows measured antenna voltages illustrating the use of the antenna voltages as a predetermined signature according to an embodiment;
Figure 3 shows an example of the use of measured antenna voltage as a predetermined signature according to another embodiment;
Figure 4 shows example timelines indicating the operation of the apparatus of figure 1; and
Figure 5 shows an example method of operating the apparatus of figure 1.

### Detailed Description

The examples of the present disclosure relate to an apparatus configured to provide wireless charging and a method of controlling a wireless charging process. The present disclosure provides an apparatus and method to restart the wireless charging process more effectively which can lead to improved user experience and more intuitive wireless charging of devices.

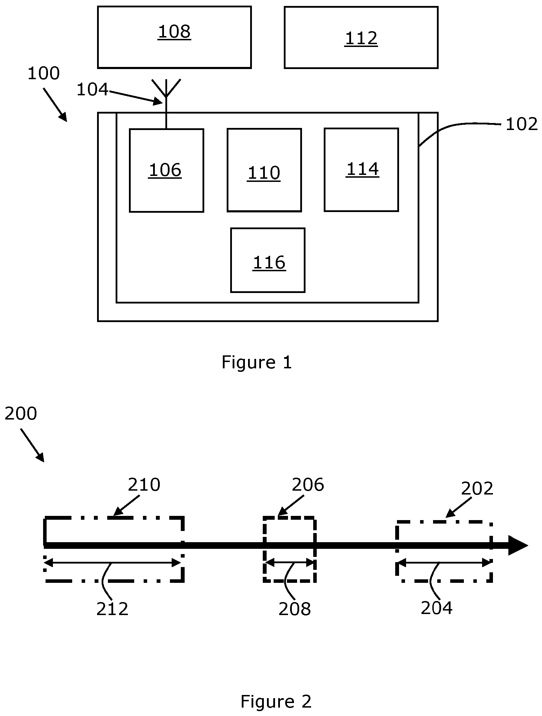

Figure 1 shows an example embodiment of an apparatus 100 configured for near field communication comprising a power-emitting device 102. The power-emitting device 102 comprises an antenna 104. The antenna 104 may be embodied as a single antenna 104 for both receiving and transmitting signals and/or power or may comprise multiple antennas, each for one or more of receiving and/or transmitting signals and/or power. The antenna 104 may be configured to inductively couple with an antenna of a power-receiving device 108 to enable power transfer, so that one can charge the other. In the present examples, the wireless charging provided by the apparatus is provided as part of the Near Field Communication, NFC, protocol. However, the functionality of the disclosure herein may be applied and/or integrated with other wireless communication protocols. The antenna 104 may be configured to operate at a particular frequency or a range of frequencies suitable for NFC. For example, the antenna may be configured to operate at 13.56MHz. NFC technology enables power transmission with combined in-band communication between the power-emitting device 102 and a power-receiving device 108. The primary or power-emitting device 102 is commonly referred to as "WLC Poller". The secondary or power-receiving device 108 is commonly referred to as "WLC Listener" or "Counterpart of Interest (COI)" in the art. In this disclosure, we will use the terms power-emitting device 102 and power-receiving device 108.

The apparatus 100 further comprises power circuitry 106 configured to provide power via the antenna 104 for wireless charging of the power-receiving device 108.

The apparatus of figure 1 also includes a processor 110. The processor 110 is configured to analyse signals received from said antenna 104 to determine the presence of the power-receiving device 108 proximal to the power-emitting device 102. It will be appreciated that in one or more examples the power-emitting device 102 may be a wireless charger and the power-receiving device 108 may be a device to be charged. Accordingly, the apparatus 100 may comprise a wireless audio earbuds case and the power-receiving device 108 may be wireless audio earbuds. In other examples the power-receiving device 108 may comprise a stylus and the apparatus 100 may comprise a holder for said stylus. In such an example, the power-receiving device 108 may be housed or stored within the apparatus 100. In other examples the power-receiving device may comprise wireless headphones or a mobile phone or other portable battery-powered accessories (like wearables, earbuds, smart glasses, stylus pens).

The processor 110 is also configured to analyse signals received from said antenna 104 to determine when a foreign object (FO) 112 is proximal to the power-emitting device 102. A FO 112 can be considered as any other device/object that is proximal to and affects the charging activity between power-emitting device 102 and the power-receiving device 108 greater than a threshold level. In some examples, the FO 112 can include NFC devices such as credit cards, access tickets, transit cards and mobile phones etc. In other examples, the FO 112 may be non-NFC devices such as metal objects which impact the RF coupling between the power-emitting device 102 and the power-receiving device 108.

It will be appreciated that being proximal to the power-emitting device 102 may comprise being at a distance at which the FO 112 can couple energy to/from the antenna 104, thereby affecting the charging activity, greater than a threshold level. The capacity to tolerate foreign objects 112 represented by the "threshold level" may be defined as part of a protocol or predetermined in any other way. This coupling of the FO 112 can be detected as a load on the antenna 104. The load on the antenna may be characterised by measuring a voltage or changes in the voltage over the antenna 104 while the antenna 104 is energised for providing wireless charging. In the present example, the apparatus includes an antenna loading measurement circuitry 114 for measuring a property of the antenna, such as a voltage, indicative of the load on the antenna 104. The apparatus 100 also includes a memory 116 for storing the measured property of the antenna 104, such as the voltage. In some examples the memory 116 may be volatile and/or non-volatile memory for storing a database or table. The power-receiving device 108 being proximal to the power-emitting device 102 may be determined by measuring said antenna load and/or by communication between the apparatus 100 or power-emitting device 102 and the power-receiving device 108.

Conversely, not being proximal to the power-emitting device 102 may be defined, for the power-receiving device 108, as having a separation at which the power-emitting device is configured not to provide charging of the power-receiving device 108. Not being proximal to the power-emitting device 102 may be defined, for the foreign object 112, as a separation such that the FO 112 has negligible effect, or lower than a threshold level, on the load on the antenna 104 of the power-emitting device 102.

It will be appreciated that coupling between the antenna 104 and the power-receiving device 108 is by way of electromagnetic coupling as is known in the art for wireless charging systems.

The processor 110 of figure 1 is configured to analyse at least the signals from the antenna 104 and based on said analysis of the signals being indicative of the power-emitting device 102 being proximal to a foreign object 112, the processor 110 is configured to control the power circuitry 106 to either interrupt wireless charging (if charging is already underway) or not to initiate provision of power for wireless charging of the power-receiving device 108 (if wireless charging has not yet started). This level of control can prevent unwanted power consumption in the power-emitting device 102 and can avoid unwanted power absorption by the FO 112 which can lead to undesired effects such as heating or excessive power consumption. Controlling the power-emitting device 102 in such a manner can improve the efficiency and performance of the apparatus 100. In some examples, the processor 110 may also be configured to analyse the power provided by the power circuitry 106 and when said analysis of the power provided by the power circuitry 106 is indicative of the power-emitting device 102 being proximal to a foreign object 112, the processor 110 may be configured to control the power circuitry 106 to either interrupt wireless charging (if charging is already underway) or not to initiate provision of power for wireless charging of the power-receiving device 108 (if wireless charging has not yet started).

In some examples, the analysis of the signals being indicative that the power-emitting device 102 is proximal to the foreign object 112 may be determined by the processor 110 by monitoring a number of different parameters. In some examples the processor 110 may be configured to determine a decrease in an efficiency of power transfer between the power-emitting device 102 and the power-receiving device 108. The efficiency may be determined based on information transmitted between the power-emitting device 102 and the power-receiving device 108. In some examples the information may be transmitted and/or received by said antenna 104 and may include information related to the power transmitted by the power-emitting device 102 and also information indicative of the actual power received by the power-receiving device 108. In other examples, the information related to the power transmitted by the power-emitting device 102 may be obtained from the power circuitry 106 directly.

In other examples, the processor may be configured to determine a rate of change, above a threshold, in the power provided by the power circuitry 106 for wireless charging of the power-receiving device 108. The rate of change of the power provided by the power circuitry 106 may be based on monitoring by the processor 110 a number of electrical circuit parameters, such as, but not limited to the current, the voltage or the power provided to said antenna 104 by the power circuitry 106. In some examples the processor 110 may be configured to control the power circuitry 106 to either interrupt or not initiate said provision of power for wireless charging of the power-receiving device 108 when said rate of change of power exceeds a predetermined threshold. In some examples the threshold may be based on a predetermine voltage threshold and in other examples may be based on a threshold current. It will be appreciated that these changes in the power provided by the power circuitry 106 may be indicative of the presence of the FO 112. In some examples the power-emitting device 102 being proximal to a foreign object 112 may reduce the overall circuit impedance and can result in an unexpected increase in the power that is absorbed.

When analysis of the signals indicate that a FO-removal event has occurred. That is, when the FO 112 is no longer proximal to the power-emitting device 102 while the power-receiving device 108 remains proximal the power-emitting device 102. The processor 110 is configured to control the power circuitry 106 to provide power for wireless charging of the power-receiving device 108.

In this situation, the FO 112 is removed such that it no longer affects the charging process, which can be detected by determination of the antenna load by the antenna loading measurement circuitry 114. Determining that the power-receiving device 108 remains proximal may be determined by communication with the power-receiving device 108 or also monitoring of the antenna load. Accordingly, said signals from the antenna 104 analysed by the processor 110 may comprise communication signals from the power-receiving device 108 or antenna load measurement signals. The above functionality can advantageously allow for the charging of the power-receiving device 108 to resume once a foreign object 112 is removed without any further input or action required by the user. This can improve the overall effectiveness of the wireless charging system and improve the user experience.

The processor 110 may have additional functionality. For example, in some examples, the processor 110 is configured to, based on said analysis of the signals being indicative that the power-emitting device 102 is proximal to the power-receiving device 108 and that no FO 112 is proximal to the power-receiving device 112, control the power circuitry 106 to provide power for wireless charging of the power-receiving device 108. In such an example, the wireless charging is initiated only when the power-receiving device 108 is proximal to the power-emitting device 102 and no FO 112 is present.

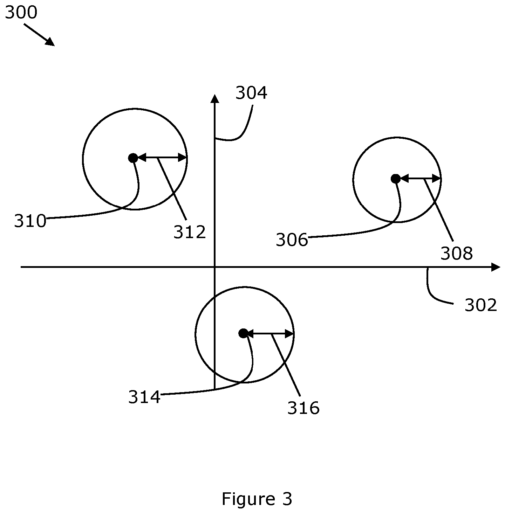

We will now describe examples of how the antenna loading measurement circuitry 114 may be used to determine the effect of the FO 112 and/or the power-receiving device 108 on the loading of the antenna 104. Figures 2 and 3 show examples of the antenna voltage as measured by two different embodiments. Figure 2 shows an embodiment in which only the magnitude of the antenna voltage 200 is measured and figure 3 shows an embodiment in which the antenna voltage 300 is measured in the IQ plane (this will be described in more detail later). Figure 2 schematically shows three characteristic antenna voltages that have been found to be indicative of the type of device/object that is proximal to the power-emitting device 102. These characteristic antenna voltages may be termed "predetermined signatures" 202, 206, 210 which each indicate the type of device and/or object that is proximal to the power-emitting device 102. The signatures may be stored in the memory 116. It will be appreciated that in the present examples the antenna voltage 200 is indicative of the impedance of, or load on, the antenna 104. It will be appreciated that the impedance of antenna 104 can be a function of the antenna's self-impedance and also the effect of coupling between the antenna 104 and the power-receiving device 108 and/or the FO 112. In some examples the processor 110 may be configured to measure changes in the impedance of the antenna 104 (such as by measuring a resulting change in the measured antenna voltage 200) and compare said changes to predetermined information. Changes to the impedance of the antenna 104 can be indicative of additional loading due to a FO 112 being proximal to the power-emitting device 102. Alternatively, the antenna voltage 200 or changes therein can be indicative of poor electromagnetic coupling between the power-emitting device 102 and the power-receiving device 108 which may be indicative of a foreign object 112 being proximal to the power-emitting device 102.

The three predetermined signatures comprise:
1) Power-receiving device detected signature 202. The power-receiving device detected signature 202 comprises antenna voltages 200 indicative that the foreign object 112 is not proximal to the power-emitting device 102 but the power-receiving device 108 is proximal the power-emitting device 102.
2) FO detected signature 206, comprising antenna voltages 200 indicative of when there is only a FO 112 proximal to the power-emitting device 102 or may also indicate when both the FO 112 and the power-receiving device 108 are proximal to the power-emitting device 102.
3) Free air detected signature 210 comprising antenna voltages 200 indicative of when there is no foreign object 112 proximal to the power-emitting device 102.

It will be appreciated that the predetermined signatures 202, 206, 210 may be based on average values taken over multiple samples. It will also be appreciated that each of the three predetermined signatures comprises a range shown by the double headed arrows 204, 208, 212. These ranges of values may account for environmental factors and manufacturing tolerances which can lead to a range of antenna loading measurements being indicative of the same presence/non-presence of the power-receiving device/FO.

It will also be appreciated that the magnitude of the voltage of each of the predetermined signatures (i.e. the relative lateral positions of each predetermined signature along the axis in figure 2) as shown in Figure 2 is only a schematically presented example for understanding. That is, the "free air detected" signature 210 is not always lower than the power-receiving device detected signature 202 and vice-versa. In fact, the predetermined signatures 202, 206, 210 may be characterised by different voltage ranges or discontinuous voltage ranges.

In some examples, the measured antenna load transitioning between the values defined by the predetermined signatures 202, 206 and 210 represent different events as will be described below:
When the processor 110 determines that the antenna voltage comprises a value that transitions from being within the free air detected signature 210 to the power-receiving device detected signature 202, it may be determined that a power-receiving device 108 is brought proximate to the power-emitting device 102. In this case, the processor 110 may be configured to cause the power circuitry 106 to provide power for wireless charging.

When the processor 110 determines that the antenna voltage transitions from power-receiving device detected signature 202 to FO detected signature 206, it may be determined that the FO 112 is presented to or is proximal to the power-emitting device 102. In this case the apparatus 100 is configured to cause the power circuitry 106 to stop wireless charging if wireless charging is currently in progress. Similarly, when the processor 110 determines that the antenna voltage transitions from the power-receiving device detected signature 202 to the free air detected signature 210, the processor 110 may cause the power circuitry 106 to stop wireless charging as there is no power-receiving device 108 present. In some examples, the processor 110 of the apparatus 100 may determine the antenna voltage 200 to comprise an FO detected signature 206 and when a power-receiving device 108 is also brought into proximity of the power-emitting device 102, the antenna voltage 200 will change but it will not be one of the predetermined voltages that relate to the power-receiving device detected signature 202. In this case, the processor 110 may be configured to control the power circuitry 106 such that wireless charging is not initiated due to the presence of the FO 112. Once wireless charging has been stopped, the apparatus 100 may be configured to periodically monitor the antenna voltage 200 to determine when the measured antenna voltage 200 is within the power-receiving device detected signature 202 again this can be considered to comprise the FO-removal event mentioned above. Once the processor 110 determines that the antenna voltage 200 is within the range of voltages 204 comprising the power-receiving device detected signature 202 again, which indicates that only the power-receiving device 108 is proximate to the power-emitting device 102, wireless charging can be resumed automatically.

Returning to figure 1, the antenna loading measurement circuitry 114 is configured to measure the voltage 200 on the antenna 104 in response to a current provided to the antenna 104. It will be appreciated that the antenna voltage 200 is influenced by electromagnetic coupling between the antenna 104 and one or more devices (such as the power-receiving device 108) and/or foreign objects 112 proximal to the antenna 104.

The comparison of the antenna voltage 200 comprises a comparison of the antenna voltage 200 to the predetermined signatures 202, 206, 210, wherein said predetermined signature 202, 206, 210 comprises at least one antenna voltage characterising when the foreign object 112 is not proximal to the power-emitting device 102 but the power-receiving device 108 is proximal to the power-emitting device 102. As described above this signature may be considered as the power-receiving device detected signature 202.

We will now describe a second embodiment in which the predetermined signature(s) comprises magnitude and phase information. It has been found that the use of signatures including magnitude and phase information can effectively distinguish between different objects and combinations of objects being proximal to the power-emitting device 102.

In figure 3, both the magnitude and phase of the antenna voltage are measured. Figure 3 shows an IQ plane 300 with the predetermined signatures plotted thereon. It will be appreciated that in the example embodiment shown in figure 3, the antenna loading measurement circuitry 114 is configured to determine an in-phase (I) component 302 and a quadrature (Q) component 304 of the antenna voltage 300. The predetermined signatures are defined by I and Q components 306, 310, 314 or ranges of I and Q components 308, 312, 316. In some examples the ranges of I and Q components 308, 312, 316 define an acceptable tolerance around the I and Q components 306, 310, 314 to account for variations in the measured antenna voltages 300. The example of figure 3 shows the predetermined signatures 306, 310, 314 as points in the IQ plane and the range of I and Q components 308, 312, 316 as forming a circle about the respective predetermined signature 306, 310, 314. However, it will be appreciated that the range of values 308, 312, 316 may describe any arbitrary shape around or in the vicinity of the predetermined signatures 306, 310, 314. In some other examples the range of values 308, 312, 316 may also include discontinuous regions of the IQ plane.

In such an example, the processor 110 is configured to compare the I and Q components of the measured antenna voltage 300 to I and Q components 306, 310, 314 or ranges of I and Q components 308, 312, 316 defined by the predetermined signature(s). The processor 110 may be configured to use the comparison to determine which devices/objects are/are not proximal to the power-emitting device 102.

It will be appreciated that while I and Q values are used in the present example, other measurable parameters of the power-emitting device 102 or power-receiving device 108 can be used as the signatures such as RF on/off ringing response or the current supplied by the power-emitting device 102.

For comparison with figure 2, figure 3 also shows the equivalent three predetermined signatures listed below:
1) Power-receiving device detected signature 306,
2) FO detected signature 314, and
3) Free air detected signature 310

It will also be appreciated that the ranges 308, 312 and 314 associated with each of the predetermined signatures 306, 310, 314 can account for variations introduced by environmental factors such as temperature variation, measurement uncertainty and also can account for manufacturing tolerances.

It will also be appreciated that the FO detected signatures 206 and 314 can include antenna loading values/voltages that results from the power-receiving device 108 and the foreign object 112 both being proximal to the power-emitting device 102 simultaneously. In this case the wireless charging will also be stopped.

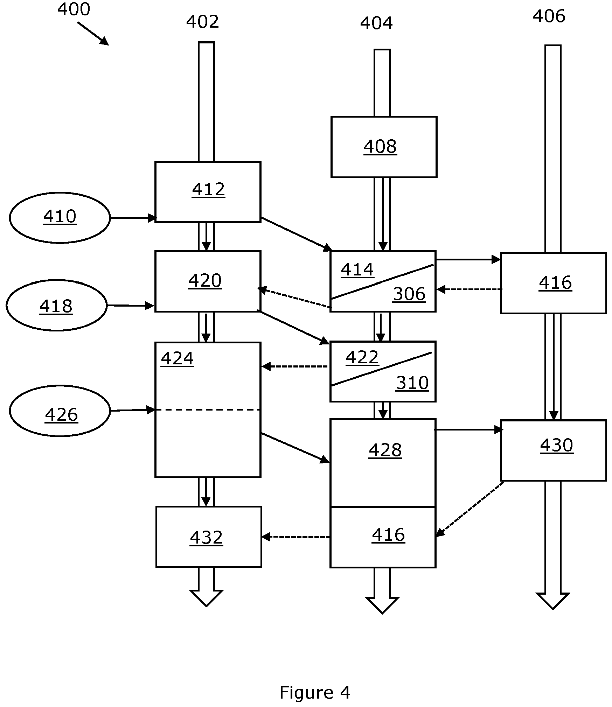

Figure 4 shows an overview 400 of concurrent timelines 402, 404, 406. Timeline 402 shows the state of the power-emitting device 102. Timeline 404 shows the voltage(s) measured by the antenna loading measurement circuitry 114 of the power-emitting device 102 at different times. Timeline 406 shows times when each of the measured voltages during timeline 404 are compared to a database of signatures to identify whether the measured voltage corresponds to one of the predetermined signatures stored in the memory 116 accessible by the processor 110. Timeline 404 shows the free air detected signature as an initial signature 408 when it is determined that no FO 112 or power-receiving device 108 is proximate to the power-emitting device 102.

It will be appreciated that when there is no power-receiving device 108 and FO 112 proximate to the power-emitting device 102, the measured antenna voltage 300 will be within the range of values defined by the free air detected signature 408 (i.e. within the permitted range 312). Block 412 shows the power-emitting device 102 or the processor 110 thereof entering an "approach detection state" 412.

At event 410 the user couples or otherwise presents the power-receiving device 108 to the power-emitting device 102, e.g. to initiate wireless charging of a power-receiving device 108. The presence of the power-receiving device 108 affects the measured antenna voltage 414. Due to the coupling between the antenna 104 and the power-receiving device 108, the measured antenna voltage 414 will change and will no longer occupy region of the free air signature 310 in the I Q plane 300. This change in the antenna voltage can trigger the power-emitting device 102 to start a communication phase with power-receiving device 108. The communication phase may be directly established by the power-emitting device 102 or by the processor 110 of the apparatus 100. The measured antenna voltage is deemed to be the power-receiving device detected signature 306 only if the power-emitting device 102 successfully detects that the power-receiving device 108 is proximate to the power-emitting device 102 via the communication phase between the power-emitting device 102 and the power-receiving device 108.

In one or more further examples, the processor 110 may be configured to store the I and Q values (and perhaps a range based on the I and Q values) of the measured antenna voltage 414 as a new signature represented by signature 416 in a database for future reference. Thus, the power-receiving device detected signature 202, 306 may comprise a general signature intended to be indicative of the voltage(s) detected when a generic power-receiving device 108 is proximal the power-emitting device 102. However, the new signature that is stored is representative of the voltage(s) detected based on the present power-receiving device in the present environment, thereby providing a more accurate characterization of the specific power-receiving device 108 being proximal.

Once the power-receiving device 108 is detected by confirming that the measured antenna voltage 414 matches a signature stored in the memory 116 or database and that the communication phase between the between the power-emitting device 102 and the power-receiving device 108 has been successful, the power-emitting device 102 may be configured to then initiate wireless charging, represented by block 420. Action 418 represents that while the wireless charging 420 is underway, the user moves to near a FO 112 or otherwise presents 418 a FO 112 to the power-emitting device 102.

There are many different FO 112 detection methods which are not all described here for brevity. However, in some examples FO 112 detection may include monitoring of a power transfer efficiency drop determined by power circuit 106. Another example includes monitoring of a sudden change in the current draw and can also include monitoring a change in the impedance of the antenna 104, which can cause the measured antenna voltage to change 422. In some examples, when the FO 112 is detected the apparatus 100 and/or the processor 110 may be configured to stop providing wireless charging 424.

The voltage detected at block 422 is not the power-receiving device detected signature 306 and so the processor 110 is configured to stop provision of wireless charging.

Once the wireless charging is paused, the power-emitting device 102 monitors the antenna voltage 300 to detect a predetermined signature that is indicative of a FO removal event 426.

This monitoring may be continuous or may be periodic whilst the provision of wireless charging has been stopped 424. The processor 110 may be configured to monitor the antenna voltage 300 by causing the energising of the antenna and monitoring the resulting load on the antenna 104 as mentioned above.

Event 426 shows the FO 112 is removed (whilst the power-receiving device 108 is still proximal to the power-emitting device 102). The resulting change in the measured voltage on the antenna is shown by 428. The measured voltage represented by block 428 is then compared to the stored signatures shown by box 430 and a match is confirmed with stored signature 416. This indicates that the power-receiving device 108 is present but without the FO 112. The power-emitting device 102 is configured to resume charging of the power-receiving device 108, shown by box 432, automatically without any additional input from the user and, in particular, without having to remove the power-receiving device 108 from being proximal the power-emitting device 102.

We also disclose a further way in which the power-emitting device 102 may determine the presence of different devices and/or foreign objects. In one or more embodiments, the processor 110 is configured to provide for transmission of one or more messages for the power-receiving device 108 and to receive one or more response messages during a time when the power circuitry 106 is providing power for wireless charging. In some examples, the processor 110 is configured to extract from the one or more response messages, information indicative of the power the power-receiving device 108 is receiving and determine changes in said power the power-receiving device 108 is receiving relative to the power the power circuitry 106 is providing. This can allow for FO detection by comparing the expected received power to the actual power that is being received by the power-receiving device 108. Significant differences between the expected and actual power received (after taking account of power transfer efficiency) can be indicative of a foreign object.

According to the example of figure 4, the processor 110 is configured to determine that the FO-removal event has occurred based on the condition that: the I component 302 and the Q component 304 of the antenna voltage 300 is within a threshold tolerance of the I and Q components of the power-receiving device detected signature 416 following the control of the power circuitry 106 to interrupt said provision of power 424 for wireless charging of the power-receiving device 108. It will be appreciated that the processor 110 is configured to determine the power-receiving device detected signature 306 based on one or more measurements of the respective antenna voltages 300 at a time when analysis of the signals is indicative of the power-emitting device 102 being proximal to the power-receiving device 108 while not being indicative that a foreign-object 112 is proximal to the power-emitting device 102. Thus, in some examples the signature for indicating that only the power-receiving device 108 is proximate to the power-emitting device 102 is measured and stored when the user attaches or otherwise presents 410 the power-receiving device 108 to the power-emitting device 102 for the first time, i.e. during an initialising procedure.

It will be appreciated that the plurality of predetermined signatures may be saved in a database/look-up table that is stored within the memory 116 of the apparatus 100 or may be stored external to the apparatus 100, such as on a server which the processor 110 of the apparatus 100 can access. In some examples the plurality of predetermined signatures can be stored in a table as shown below:

**Table 1, plurality of predetermined power-receiving device detected signatures.**

| **Index** | **Only "power-receiving device detected signature"** | **Signature confidence score (C)** |
|---|---|---|
| 1 | V_{mon1,I}, V_{mon1,Q}, Tol₁ | C1 |
| 2 | V_{mon2,I}, V_{mon2,Q}, Tol2 | C2 |
| 3 | ........ | ........ |
| 4 | ........ | ........ |
| N-1 | V_{monN-1,I}, V_{monN-1,Q}, TolN-₁ | C_{N-1} |
| N | V_{monN,I}, V_{monN,Q}, TolN | C_{N} |

In the present example, the plurality of predetermined signatures are defined by the predetermined voltage 306 in the I and Q plane and the associated range 308. In some examples the range 308 may also be referred to as an acceptable tolerance (Tol) which can account for external variations due to environment or due to manufacturing processes. Each of the plurality of predetermined signatures can also be provided with a confidence score (C).

Thus, each entry in table 1 has a signature voltage and a tolerance value (Tol) and an associated confidence score (C). As such, each entry in the database/look-up table is defined by:
- Measured antenna voltage 300 In-phase 302 (I component, e.g. Vmon1,I),
- Measured antenna voltage 300 Quadrature-phase 304 (Q component, e.g. Vmon1,Q) as rectangular coordinates;
- Tolerance value (e.g. Tol1);
- Confidence score.

It should be noted that the antenna voltage 300 can also be represented using polar coordinates (magnitude and angle). For sake of simplicity, only rectangular coordinates will be discussed here but a skilled person knows how to switch between such co-ordinate systems.

The power-receiving device detected signature 416 is inserted into the table/database when power-receiving device 108 is detected and the processor 110 successfully establishes a communication phase between the power-emitting device 102 and the power-receiving device 108 and only if the signature is not already in the table/database. During signature insertion, its confidence score entry is initialized to a default confidence score. In some examples, this default confidence score is not decreased if the antenna voltage matches with any one of said plurality of predetermined signatures at step 430. In other examples, the confidence score is decreased if the antenna voltage matches with any one of said plurality of predetermined signatures stored in the memory 116 and the processor 110 (for example) is unable to successfully establish the communication phase between the power-emitting device 102 and the power-receiving device 108. The confidence score of a respective signature of the plurality of predetermined signatures is thus decreased each time the I and Q components 302, 304 of the antenna voltage 300 indicate a match with said respective signature of said plurality of predetermined signatures and when a subsequent communication phase between the power-emitting device 102 and the power-receiving device 108 is not successfully established. If confidence score drops below a threshold (e.g. zero) then the respective signature of said plurality of predetermined signatures is removed from memory 116 or database.

The use of the confidence score thereby enables removal of particular predetermined signatures that do not result in the establishment of a successful communication phase between the power-emitting device 102 and the power-receiving device 108. This can ensure that only good quality signatures are retained in the table/database as stored in the memory 116. It will be appreciated that in some examples the threshold may be set as a nonzero value.

In some examples a FO 112 (e.g. a non-NFC FO such as metal coins) is presented to the power-emitting device 102 first while the apparatus 100 is in "approach detection state" at 412. In such an example the power-receiving device 108 is presented to the power-emitting device 102 after the FO 112 has been presented. This causes the processor 110 to establish the communication phase between the power-emitting device 102 and the power-receiving device 108. As there is valid power-receiving device 108 present the communication phase can be successfully established. On successful establishment of the communication phase, the following steps can be performed:
The measured antenna voltage 300 is added to the database as a power-receiving device signature 306.

Apparatus 100 is put into a charging state, where it is configured to provide wireless charging of the power-receiving device 108. However, the presence of the FO 112 can only detected after a few charging cycles due to the effect of the FO 112 on the power transfer or the coupling between the antenna 104 and the power-receiving device 108. Once the presence of the FO 112 is detected, the confidence score associated with the respective predetermined signature of the plurality of predetermined signatures is decreased and is eventually removed once the confidence score reaches a threshold value. Once the respective predetermined signature of the plurality of predetermined signatures is removed from the memory 116, that particular predetermined signature can no longer initiate a wireless charging step. This can allow the system to effectively learn and discard signatures i.e. antenna voltages related to cases when both a FO 112 and the power-receiving device 108 are present together.

When the processor 110 of the apparatus 100 matches a measured antenna voltage 300 to a stored predetermined voltage 306 in the memory 116, the apparatus 100 is then configured to establish the communication phase by using an RF modem (not shown) to communicate with power-receiving device 108 to confirm whether it is present or not. It will be appreciated that this communication phase can be done using a range of different protocols as known to the skilled person and so will not be described here. It will be appreciated that this communication phase between the power-receiving device 108 and the power-emitting device 102 will require more energy than the simple monitoring of the antenna voltage by the antenna loading measurement circuitry 114.

If apparatus 100 fails to communicate with power-receiving device 108 (i.e. device attachment is not confirmed), then apparatus 100 is configured to pause or not start wireless charging. Also, the apparatus 100 decreases the confidence score of the respective power-receiving device detected signature 306 which indicated that the power-receiving device 108 was present.

It should be noted that the power-receiving device detected signature 306 can be removed from the memory 116, once its respective confidence score falls below a predefined threshold (e.g. falls to zero). This ensures that only good quality "only power-receiving device detected" signatures 306 are maintained by the database 544 and can also avoid the apparatus 100 from initiating wireless charging for the respective signature.

Ensuring only predetermined signatures that correctly indicate the presence of a power-receiving device 108 being proximate the power-emitting device 102 can lower the overall power consumption of the apparatus 100 because detecting the power-receiving device detected signature 306 initiates a more power intensive communication process than the simple RF pinging that is used to monitor the antenna voltages 200, 300.

In some examples, in case of power-receiving device detected signature 306, the apparatus 100 is required to operate an RF modem (both TX & RX) for a longer time to transmit NFC communication packets (from the apparatus 100) and then to receive the response back from the power-receiving device 108. Whereas while in RF polling mode (i.e. Ping test) only a very small duration RF pulse is transmitted by the power-emitting device 102 and the interaction of this RF pulse with nearby antenna (e.g. a coil) of the power-receiving device 108 is captured as the antenna voltage which is used as an input for further processing without requiring a modem to be operated.

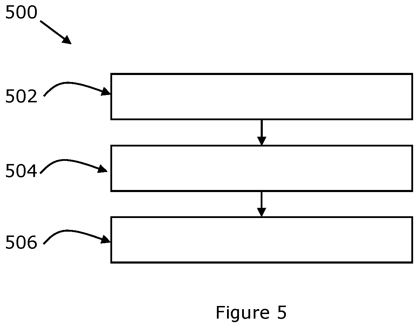

Figure 5 shows an example method 500 of controlling an apparatus, the apparatus comprising the power-emitting device, the power-emitting device comprising: an antenna; power circuitry configured to provide power via the antenna for wireless charging of the power-receiving device; and the processor. The method comprises the processor 110:
analysing 502 at least signals from said antenna 104 to determine the presence of the power-receiving device 108 proximal the power-emitting device 102 and to determine the presence of a foreign object 112 proximal the power-emitting device 102.
based on one or both of said analysis of the signals and the power provided by the power circuitry being indicative of the power-emitting device 102 being proximal to a foreign object 112; controlling 504 the power circuitry 106 to either interrupt or not initiate said provision of power for wireless charging of the power-receiving device 108.
in response to said analysis of the signals being indicative that a FO-removal event has occurred, wherein said FO-removal event comprises the FO 112 no longer being proximal the power-emitting device 102 while the power-receiving device 108 remains proximal the power-emitting device 102. Controlling 506 the power circuitry 106 to provide power for wireless charging of the power-receiving device 108.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computerreadable or computer-usable storage media or mediums. Such computerreadable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. An apparatus comprising:
a power-emitting device comprising:
an antenna,
power circuitry configured to provide power via the antenna for wireless charging of a power-receiving device, and
a processor, the processor configured to at least analyse signals from said antenna to determine the presence of the power-receiving device proximal the power-emitting device and to determine the presence of a foreign object, FO, proximal the power-emitting device, and
wherein the processor is configured to:
based on one or both of said analysis of the signals and the power provided by the power circuitry being indicative of the power-emitting device being proximal to a foreign object, control the power circuitry to either interrupt or not initiate said provision of power for wireless charging of the power-receiving device, and
in response to said analysis of the signals being indicative that a FO-removal event has occurred, wherein said FO-removal event comprises the FO no longer being proximal the power-emitting device while the power-receiving device remains proximal the power-emitting device, control the power circuitry to provide power for wireless charging of the power-receiving device.

2. The apparatus according to claim 1, wherein said analysis of the signals being indicative of the power-emitting device being proximal to the foreign object is determined by the processor being configured to one or both of:
determine a decrease in an efficiency of power transfer between the power-emitting device and the power-receiving device, based on information indicative of the power received by the power-receiving device in the signals from said antenna and information indicative of the power provided by the power circuitry; and
determine a rate of change, above a threshold, in the power provided by the power circuitry for wireless charging of the power-receiving device.

3. The apparatus according to claim 1 or claim 2, wherein the processor is configured to, based on said analysis of the signals being indicative that the power-emitting device is proximal to the power-receiving device and no FO is proximal the power-receiving device, control the power circuitry to provide power for wireless charging of the power-receiving device.

4. The apparatus according to claim 1 or claim 2, wherein the processor being configured to control the power circuitry to either interrupt or not initiate said provision of power for wireless charging of the power-receiving device comprises the processor being configured such that:
if said analysis of the signals is indicative of the power-emitting device being proximal to the FO at a time when the power circuitry is providing power for wireless charging of the power-receiving device, said processor is configured to control the power circuitry to interrupt said provision of power for wireless charging of the power-receiving device; and
if said analysis of the signals is indicative of the power-emitting device being proximal to the FO and at later time the power-receiving device is determined to be proximal to the power-emitting device in addition to said FO, said processor is configured to control the power circuitry to not initiate said provision of power for wireless charging of the power-receiving device at least while said FO is determined to be proximal the power-emitting device.

5. The apparatus of any preceding claim, wherein said processor is configured to, as part of said analysis of the signals being indicative that the FO-removal event has occurred, compare one or more signals received from the antenna to a predetermined signature that characterises signals expected from said antenna without the foreign object proximal the power-emitting device but with the power-receiving device proximal the power-emitting device, and determine the FO-removal event based on said comparison.

6. The apparatus of claim 5, wherein the apparatus includes antenna loading measurement circuitry configured to measure an antenna voltage from the antenna in response to a current provided to the antenna, and wherein said comparison comprises a comparison of the antenna voltage to the predetermined signature, wherein said predetermined signature comprises at least one antenna voltage characterising when the foreign object is not proximal the power-emitting device but the power-receiving device is proximal the power-emitting device.

7. The apparatus of claim 6, wherein said predetermined signature comprises a range of antenna voltages characterising when the foreign object is not proximal the power-emitting device but the power-receiving device is proximal the power-emitting device.

8. The apparatus of claim 5, wherein the apparatus includes antenna loading measurement circuitry configured to measure an antenna voltage from the antenna in response to a current provided to the antenna, wherein the antenna loading measurement circuitry is configured to determine an in-phase, I, component and a quadrature, Q, component of the antenna voltage, and wherein said comparison comprises a comparison of the I and Q components of the antenna voltage to the predetermined signature, and wherein said predetermined signature is based on I and Q components characterising when the foreign object is not proximal the power-emitting device but the power-receiving device is proximal the power-emitting device.

9. The apparatus of claim 8, wherein said processor is configured to determine that the FO-removal event has occurred based on the condition that: the I component and the Q component of the antenna voltage is within a threshold tolerance of the I and Q components of the predetermined signature following the control of the power circuitry to interrupt said provision of power for wireless charging of the power-receiving device.

10. The apparatus of any one of claims 5 to 9, wherein the processor is configured to determine the predetermined signature based on one or more measurements of the respective antenna voltages at a time when said analysis of the signals is indicative of the power-emitting device being proximal to the power-receiving device while not being indicative that a foreign-object is proximal the power-emitting device.

11. The apparatus of claim 9, wherein the processor is configured to store a plurality of predetermined signatures and said comparison is a comparison to determine whether the I and Q components of the antenna voltage match with any one of said plurality of predetermined signatures.

12. The apparatus of claim 11, wherein the processor is configured to store, in a memory, the plurality of predetermined signatures each with a confidence score, wherein based on the antenna voltage matching with any one of said plurality of predetermined signatures, the processor is configured establish communication between the power-emitting device and the power-receiving device, wherein upon unsuccessfully establishing said communication, the processor is configured to decrease the confidence score of the respective signature of the plurality of predetermined signatures, and wherein the confidence score is used to determine whether to retain or remove the respective signature of the plurality of predetermined signatures from the memory.

13. The apparatus of any preceding claim wherein the processor is configured to perform said analysis of the signals from said antenna to determine the presence of the foreign object proximal the power-emitting device by the processor being configured to
provide for transmission of one or more messages for the power-receiving device and to receive one or more response messages during a time when the power circuitry is providing power for wireless charging, wherein the processor is configured to extract from the one or more response messages, information indicative of the power the power-receiving device is receiving and determine changes in said power the power-receiving device is receiving relative to the power the power circuitry is providing.

14. The apparatus of any preceding claim wherein the processor being configured to analyse the signals from said antenna to determine the presence of the power-receiving device proximal the power-emitting device and to determine the presence of a foreign object proximal the power-emitting device is provided by the processor being configured to measure changes in impedance of the antenna and compare said changes to predetermined information.

15. A method of controlling an apparatus, the apparatus comprising a power-emitting device, the power-emitting device comprising: an antenna; power circuitry configured to provide power via the antenna for wireless charging of a power-receiving device; and a processor, wherein the method comprises, by the processor,
analysing at least signals from said antenna to determine the presence of the power-receiving device proximal the power-emitting device and to determine the presence of a foreign object proximal the power-emitting device, and
based on one or both of said analysis of the signals and the power provided by the power circuitry being indicative of the power-emitting device being proximal to a foreign object, FO, controlling the power circuitry to either interrupt or not initiate said provision of power for wireless charging of the power-receiving device, and
in response to said analysis of the signals being indicative that a FO-removal event has occurred, wherein said FO-removal event comprises the FO no longer being proximal the power-emitting device while the power-receiving device remains proximal the power-emitting device, controlling the power circuitry to provide power for wireless charging of the power-receiving device.

## Amended claims

### Amended claims in accordance with Rule 137(2) EPC.

1. An apparatus comprising:
a power-emitting device comprising:
an antenna,
power circuitry configured to provide power via the antenna for wireless charging of a power-receiving device, and
a processor, the processor configured to at least analyse signals from said antenna to determine the presence of the power-receiving device proximal the power-emitting device and to determine the presence of a foreign object, FO, proximal the power-emitting device, and
wherein the processor is configured to:
based on one or both of said analysis of the signals and the power provided by the power circuitry being indicative of the power-emitting device being proximal to a foreign object, control the power circuitry to either interrupt or not initiate said provision of power for wireless charging of the power-receiving device, and
in response to said analysis of the signals being indicative that a FO-removal event has occurred, wherein said FO-removal event comprises the FO no longer being proximal the power-emitting device while the power-receiving device remains proximal the power-emitting device, control the power circuitry to provide power for wireless charging of the power-receiving device;
wherein said processor is configured to, as part of said analysis of the signals being indicative that the FO-removal event has occurred, compare one or more signals received from the antenna to a predetermined signature that characterises signals expected from said antenna without the foreign object proximal the power-emitting device but with the power-receiving device proximal the power-emitting device, and determine the FO-removal event based on said comparison;
wherein the apparatus includes antenna loading measurement circuitry configured to measure an antenna voltage from the antenna in response to a current provided to the antenna, wherein the antenna loading measurement circuitry is configured to determine an in-phase, I, component and a quadrature, Q, component of the antenna voltage, and wherein said comparison comprises a comparison of the I and Q components of the antenna voltage to the predetermined signature, and wherein said predetermined signature is based on I and Q components characterising when the foreign object is not proximal the power-emitting device but the power-receiving device is proximal the power-emitting device.

2. The apparatus according to claim 1, wherein said analysis of the signals being indicative of the power-emitting device being proximal to the foreign object is determined by the processor being configured to one or both of:
determine a decrease in an efficiency of power transfer between the power-emitting device and the power-receiving device, based on information indicative of the power received by the power-receiving device in the signals from said antenna and information indicative of the power provided by the power circuitry; and
determine a rate of change, above a threshold, in the power provided by the power circuitry for wireless charging of the power-receiving device.

3. The apparatus according to claim 1 or claim 2, wherein the processor is configured to, based on said analysis of the signals being indicative that the power-emitting device is proximal to the power-receiving device and no FO is proximal the power-receiving device, control the power circuitry to provide power for wireless charging of the power-receiving device.

4. The apparatus according to claim 1 or claim 2, wherein the processor being configured to control the power circuitry to either interrupt or not initiate said provision of power for wireless charging of the power-receiving device comprises the processor being configured such that:
if said analysis of the signals is indicative of the power-emitting device being proximal to the FO at a time when the power circuitry is providing power for wireless charging of the power-receiving device, said processor is configured to control the power circuitry to interrupt said provision of power for wireless charging of the power-receiving device; and
if said analysis of the signals is indicative of the power-emitting device being proximal to the FO and at later time the power-receiving device is determined to be proximal to the power-emitting device in addition to said FO, said processor is configured to control the power circuitry to not initiate said provision of power for wireless charging of the power-receiving device at least while said FO is determined to be proximal the power-emitting device.

5. The apparatus of claim 1, wherein the apparatus includes antenna loading measurement circuitry configured to measure an antenna voltage from the antenna in response to a current provided to the antenna, and wherein said comparison comprises a comparison of the antenna voltage to the predetermined signature, wherein said predetermined signature comprises at least one antenna voltage characterising when the foreign object is not proximal the power-emitting device but the power-receiving device is proximal the power-emitting device.

6. The apparatus of claim 5, wherein said predetermined signature comprises a range of antenna voltages characterising when the foreign object is not proximal the power-emitting device but the power-receiving device is proximal the power-emitting device.

7. The apparatus of claim 1, wherein said processor is configured to determine that the FO-removal event has occurred based on the condition that: the I component and the Q component of the antenna voltage is within a threshold tolerance of the I and Q components of the predetermined signature following the control of the power circuitry to interrupt said provision of power for wireless charging of the power-receiving device.

8. The apparatus of any preceding claim, wherein the processor is configured to determine the predetermined signature based on one or more measurements of the respective antenna voltages at a time when said analysis of the signals is indicative of the power-emitting device being proximal to the power-receiving device while not being indicative that a foreign-object is proximal the power-emitting device.

9. The apparatus of claim 7, wherein the processor is configured to store a plurality of predetermined signatures and said comparison is a comparison to determine whether the I and Q components of the antenna voltage match with any one of said plurality of predetermined signatures.

10. The apparatus of claim 9, wherein the processor is configured to store, in a memory, the plurality of predetermined signatures each with a confidence score, wherein based on the antenna voltage matching with any one of said plurality of predetermined signatures, the processor is configured establish communication between the power-emitting device and the power-receiving device, wherein upon unsuccessfully establishing said communication, the processor is configured to decrease the confidence score of the respective signature of the plurality of predetermined signatures, and wherein the confidence score is used to determine whether to retain or remove the respective signature of the plurality of predetermined signatures from the memory.

11. The apparatus of any preceding claim wherein the processor is configured to perform said analysis of the signals from said antenna to determine the presence of the foreign object proximal the power-emitting device by the processor being configured to
provide for transmission of one or more messages for the power-receiving device and to receive one or more response messages during a time when the power circuitry is providing power for wireless charging, wherein the processor is configured to extract from the one or more response messages, information indicative of the power the power-receiving device is receiving and determine changes in said power the power-receiving device is receiving relative to the power the power circuitry is providing.

12. The apparatus of any preceding claim wherein the processor being configured to analyse the signals from said antenna to determine the presence of the power-receiving device proximal the power-emitting device and to determine the presence of a foreign object proximal the power-emitting device is provided by the processor being configured to measure changes in impedance of the antenna and compare said changes to predetermined information.

13. A method of controlling an apparatus, the apparatus comprising a power-emitting device, the power-emitting device comprising: an antenna; power circuitry configured to provide power via the antenna for wireless charging of a power-receiving device; and a processor, wherein the method comprises, by the processor,
analysing at least signals from said antenna to determine the presence of the power-receiving device proximal the power-emitting device and to determine the presence of a foreign object proximal the power-emitting device, and
based on one or both of said analysis of the signals and the power provided by the power circuitry being indicative of the power-emitting device being proximal to a foreign object, FO, controlling the power circuitry to either interrupt or not initiate said provision of power for wireless charging of the power-receiving device, and
in response to said analysis of the signals being indicative that a FO-removal event has occurred, wherein said FO-removal event comprises the FO no longer being proximal the power-emitting device while the power-receiving device remains proximal the power-emitting device, controlling the power circuitry to provide power for wireless charging of the power-receiving device
comparing, as part of said analysis of the signals being indicative that the FO-removal event has occurred, one or more signals received from the antenna to a predetermined signature that characterises signals expected from said antenna without the foreign object proximal the power-emitting device but with the power-receiving device proximal the power-emitting device, and determine the FO-removal event based on said comparison;
measuring, by antenna loading measurement circuitry of the apparatus, an antenna voltage from the antenna in response to a current provided to the antenna, and determine, using antenna loading measurement circuitry, an in-phase, I, component and a quadrature, Q, component of the antenna voltage, and wherein said comparison comprises a comparison of the I and Q components of the antenna voltage to the predetermined signature, and wherein said predetermined signature is based on I and Q components characterising when the foreign object is not proximal the power-emitting device but the power-receiving device is proximal the power-emitting device.
